# FASCICULE DE BREVET EUROPEEN

(11) **EP 0 672 855 B1**
(45) Date de publication et mention de la délivrance du brevet: **23.12.1998**
(21) Numéro de dépôt: 95400486.7
(22) Date de dépôt: 07.03.1995
(51) Int. Cl.: F16K 51/02

(54) **Vanne cryogénique intégrale sous vide**
Integrales Kryogenventil unter Vakuum
Integral cryogenic valve under vacuum

(30) Priorité: 17.03.1994 FR 9403126
(43) Date de publication de la demande: 20.09.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Scherrer, Norbert, F-27950 Saint Just (FR); Gulion, Philippe, F-27950 La Chapelle Reanville (FR); Hardouin, Etienne, F-27700 Hennezis (FR)
(74) Mandataire: Thévenet, Jean-Bruno

(56) Documents cités:
- EP-A- 0 089 563
- FR-A- 2 382 638
- US-A- 3 573 863
- US-A- 5 228 472
- INSTRUMENTS AND EXPERIMENTAL TECHNIQUES, no. 1, Janvier 1968 NEW YORK US, pages 165-166, BERENSHTEIN 'axially symmetric electromagnetic high-vacuum tube'

## Description

La présente invention concerne une vanne électromagnétique destinée spécialement à des circuits de fluides cryogéniques tels que par exemple des gaz liquéfiés.

### ART ANTERIEUR

De telles électrovannes comportent généralement un corps de vanne muni de canaux de circulation de fluide et dont la chambre centrale dans laquelle est formé le siège du clapet est fermée de façon étanche par un tube guide (appelé aussi rallonge cryogénique) s'étendant hors de la zone froide jusqu'à une zone chaude contenant le mécanisme de commande de déplacement du clapet.

Ces vannes cryogéniques présentent toutefois certains inconvénients. Notamment, le flux thermique entre zone chaude (extérieur) et zone froide (intérieur) se transmet par conduction le long de la tige du clapet jusqu'au fluide, ce qui peut en provoquer la vaporisation partielle. De plus, lors d'une ouverture du clapet, le matelas gazeux ainsi formé par cette vaporisation peut être entraîné dans le liquide et de ce fait en perturber l'écoulement. Par ailleurs, de faibles pertes par conduction nécessitent une tige de clapet (et donc une rallonge) très longue.

Le brevet US 3573863 montre une vanne pour la commande d'un fluide cryogénique comportant deux enceintes concentriques fermées par des premier et second soufflets et entre lesquelles un espace vide d'air est créé. Par cette structure, il est possible de supprimer le joint existant dans les vannes classiques au niveau de la zone froide. Toutefois, les pertes par conduction au travers de la tige centrale ne sont pas diminuées et la nécessité de placer le second soufflet en zone chaude implique la réalisation d'une vanne ayant un encombrement important.

### DESCRIPTION DE L'INVENTION

La présente invention se propose donc de réaliser une vanne cryogénique qui supprime les risques de vaporisation du fluide cryogénique et limite ainsi les pertes thermiques globales. Un autre but de l'invention est de réduire de façon très significative l'encombrement (donc la masse) d'une telle vanne.

Ces buts sont atteints par une vanne cryogénique sous vide à commande électrique conforme à la revendication 1.

Selon un mode particulier de réalisation, le noyau mobile est séparé de la bobine électromagnétique de commande, placée à l'extérieur de l'enceinte, par une chemise solidaire de cette enceinte sous vide.

En disposant le noyau actif de la bobine d'excitation dans l'enceinte sous vide on supprime les pertes par conduction véhiculées par la tige du clapet. En outre, il devient possible de supprimer la classique et indispensable rallonge cryogénique des dispositifs de l'art antérieur, ce qui a pour conséquence de réduire considérablement la masse et l'encombrement de telles vannes.

Des moyens d'étanchéité de l'enceinte avec l'extérieur sont bien entendu prévus au niveau de cette vanne et un soufflet solidaire d'une part du corps de vanne et d'autre part de la tige est également prévu pour assurer l'étanchéité entre le fluide circulant dans les canaux et l'enceinte sous vide.

Cette structure est applicable à tout type de vanne, par exemple, vanne à deux ou trois voies, monostable ou bistable, ou vanne de régulation à commande par moteur pas à pas.

### BREVE DESCRIPTION DES DESSINS

D'autres caractéristiques et avantages de la présente invention ressortiront mieux de la description suivante, faite à titre indicatif et non limitatif, en regard des dessins annexés, sur lesquels:
- la figure 1 montre un exemple de réalisation d'une électrovanne cryogénique à deux voies selon l'invention,
- la figure 2 montre un exemple de réalisation d'une vanne de régulation cryogénique selon l'invention,
- la figure 3 est une variante de réalisation de la vanne de la figure 1, et
- la figure 4 est un exemple de réalisation d'une vanne à 3 voies.

### DESCRIPTION DE MODES DE REALISATION PARTICULIERS

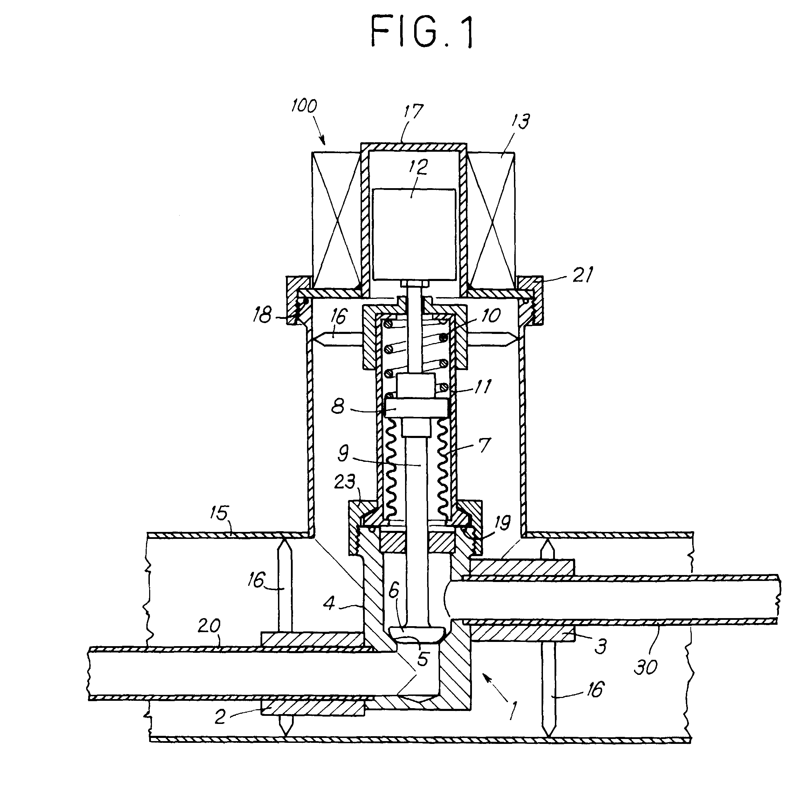

La figure 1 est un premier exemple de réalisation d'une vanne cryogénique sous vide selon l'invention. Elle comporte un corps 1 avec un canal d'entrée (par exemple 2) et un canal de sortie 3, ces canaux étant respectivement reliés à des canalisations 20, 30 de circulation d'un fluide cryogénique. Les canaux 2, 3 communiquent avec une chambre centrale 4 dans laquelle est formé un siège 5 d'un clapet 6. L'étanchéité de cette chambre est assurée par des moyens d'étanchéité, un soufflet 7, qui est rendu solidaire à une première extrémité de la chambre 4 et à une seconde extrémité d'une première face d'un épaulement 8 de la tige 9 du clapet. Cet épaulement 8 constitue également avec la face opposée de sa première face une première face d'appui d'un ressort de rappel 10 (destiné à maintenir le clapet sur son siège) dont l'autre face d'appui repose sur la paroi interne d'un tube 11 entourant la tige 9 du clapet et solidaire de la chambre 4. Une ouverture est percée à l'extrémité, opposée à la chambre 4, de ce tube 11 afin de permettre le passage de la tige du clapet à l'extrémité libre de laquelle est fixé un noyau 12 de moyens d'excitation 100 comportant également une bobine électromagnétique de commande 13. Le corps de la vanne 1 et le tube 11 qui lui est relié sont placés dans une enceinte sous vide 15, la fixation et le centrage de cette enceinte par rapport au corps de la vanne étant réalisés par l'intermédiaire de bras 16 s'étendant des canaux 2, 3 et du tube 11 jusqu'à la paroi interne de l'enceinte. La fermeture de cette enceinte au niveau du tube est obtenue par une chemise en matériau magnétique 17 qui vient entourer le noyau mobile 12 qui se trouve ainsi intégré dans l'enceinte sous vide 15, la bobine de commande 13 restant seule soumise à la pression extérieure. Des joints d'étanchéité 18,19 garantissent respectivement l'étanchéité de la chemise 17 par rapport à l'enceinte 15 et celle de la chambre centrale 4 du corps de vanne par rapport au soufflet 7 (la fixation de ces éléments entre eux étant réalisée par exemple respectivement par des écrous).

Le fonctionnement de cette vanne est particulièrement simple. Au repos, en absence d'excitation de la bobine 13, le ressort de rappel 7 maintient le clapet 9 sur son siège interdisant toute communication entre les canalisations d'entrée et de sortie 20, 30. Au contraire, lorsque la bobine est alimentée, la force magnétique résultante provoque un déplacement du noyau mobile 12, ce qui a pour effet de soulever le clapet 9 de son siège 5 et, par l'ouverture de la vanne, de mettre en communication les canalisations 20,30 de fluide cryogénique.

En plaçant le noyau dans l'enceinte sous vide (le vide inter-paroi), les pertes thermiques sont grandement réduites (les pertes par conduction sont en effet supprimées) et les problèmes de l'art antérieur liés à la nécessité de ramener les mécanismes de commande et d'étanchéité de la vanne en zone chaude sont évités.

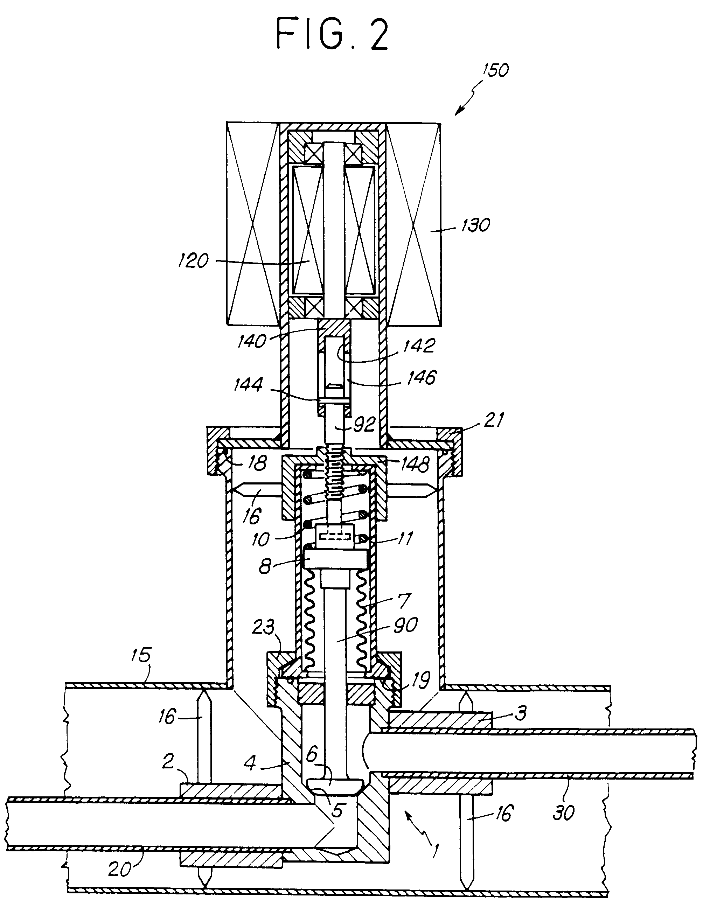

La figure 2 est un autre exemple de réalisation d'une vanne cryogénique dans lequel les moyens d'excitation sont constitués par un moteur du type pas à pas 150. A l'image de la réalisation précédente, le rotor 120 de ce moteur est intégré dans l'enceinte sous vide 15 délimitée par la chemise 17, le stator 130 restant à l'extérieur de cette enceinte. Afin de permettre la transformation du mouvement de rotation délivré par le stator en un mouvement de translation de la tige, cette tige 9 est constituée en deux parties, une première partie 90 dont une extrémité est formée par le clapet 6 et l'autre par l'épaulement 8 et une seconde partie 92 comportant une zone filetée (destinée à coopérer avec un élément écrou 148), prolongeant la partie 90 de la tige à partir de l'épaulement, et libre en rotation vis à vis de la première partie. Le rotor 120 comporte un arbre 140 muni à son extrémité libre d'un orifice non débouchant 142 dans lequel peut coulisser l'extrémité libre de la seconde partie 92 de la tige 9. L'entraînement en rotation de la tige 9 par l'arbre 140 est assuré par un axe 144 traversant l'extrémité de la tige et aboutissant dans des lumières 146 pratiquées dans cet arbre.

Comme précédemment, il est aisé de saisir le fonctionnement de cette vanne de régulation. Au repos, en absence d'alimentation du stator 130 du moteur pas à pas, le ressort de rappel 7 maintient le clapet 9 sur son siège interdisant toute communication entre les canalisations d'entrée et de sortie 20, 30. Au contraire, lorsque le stator est alimenté, le rotor se déplace sous l'effet des forces magnétiques en jeu et entraîne en rotation la seconde partie 91 de la tige qui par l'ensemble vis(zone filetée de la tige)/écrou(élément 148) agit sur la position du clapet sur son siège. Il est ainsi possible d'obtenir un passage plus ou moins important de fluide entre les canalisations 20, 30 selon l'angle de rotation du rotor.

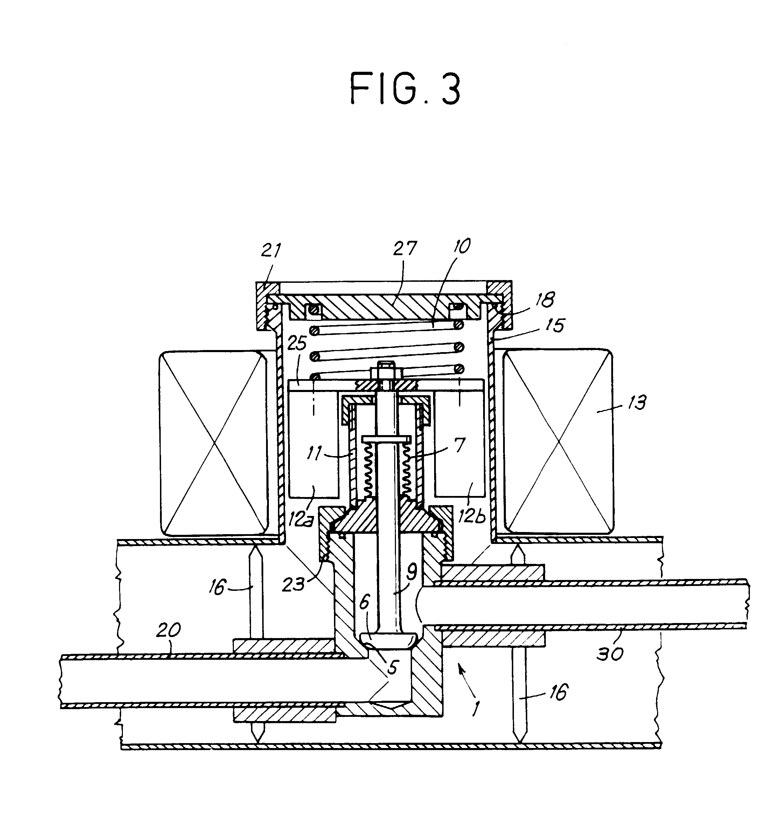

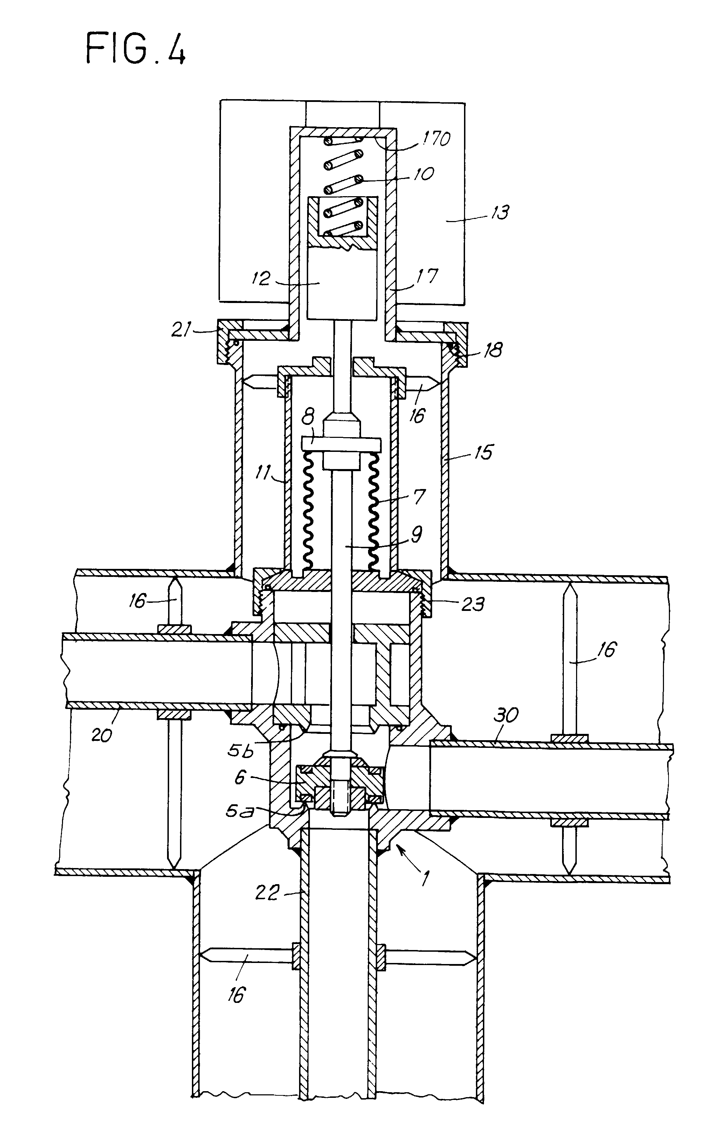

Les figures 3 et 4 représentent deux autres exemples de réalisation de vannes cryogéniques.

La figure 3 est une variante de la figure 1 dans laquelle l'encombrement de la vanne a été encore réduit. Pour cela, le noyau des moyens d'excitation est formé de deux éléments 12a, 12b disposés de part et d'autre du tube 11 sous un plateau 25 fixé à l'extrémité libre de la tige 9. Le ressort de rappel 10 est monté entre la face supérieure du plateau 25 et un couvercle 27 venant obturer de manière étanche (par l'écrou 21 et le joint d'étanchéité 18) l'enceinte sous vide 15 dont la paroi constitue maintenant la chemise d'entrefer des moyens d'excitation 100 séparant les éléments 12a, 12b du noyau de la bobine d'alimentation 13.

La figure 4 est un exemple de vanne à 3 voies avec des canalisations d'entrée 20, 22 et une canalisation de sortie 30. Ces canalisations sont reliés, par exemple par soudure, au corps de vanne 1 qui comporte un siège de clapet inférieur Sa et un siège de clapet supérieur 5b entre lesquels peut se déplacer le clapet 6. L'étanchéité du corps de vanne est assurée par des moyens d'étanchéité, le soufflet 7, qui est rendu solidaire, à une première extrémité, de ce corps 1 et, à une seconde extrémité, d'une première face de l'épaulement 8 de la tige 9 du clapet. Comme pour les réalisations précédentes, le tube 11 qui entoure la tige 9 du clapet et est solidaire du corps, est percé à son extrémité libre par une ouverture assurant le passage de la tige du clapet. Toutefois, dans l'exemple représenté, le ressort de rappel 10 n'est pas disposé entre le tube 11 et l'épaulement 8 de la tige mais entre le noyau 12 et une paroi d'extrémité interne 170 de la chemise 17 solidaire de l'enceinte sous vide 15. Le fonctionnement de cette vanne est analogue à celui de la vanne décrite en regard de la figure 1. Toutefois, en position repos, le fluide peut passer de la première canalisation d'entrée 20 à la canalisation de sortie 30, alors qu'en position d'activité ce passage est obtenu entre la seconde canalisation d'entrée 22 et la canalisation de sortie 30.

La simplicité de la structure des vannes cryogéniques selon l'invention permet leur utilisation à basse comme à haute pression et l'encombrement particulièrement réduit de ces vannes cryogéniques autorise la réalisation de vannes miniatures notamment dans le domaine de la distribution des gaz liquéfiés comme l'hélium ou l'azote liquide par exemple.

## Revendications

1. Vanne cryogénique sous vide à commande électrique comportant d'une part un corps de vanne (1) recevant le siège (5; 5a, 5b) d'un clapet (6) et des canaux d'entrée (20, 22) et de sortie (30) d'un fluide cryogénique, ce corps (1) et ces canaux (20, 22, 30) étant disposés dans une enceinte (15) dans laquelle un vide est créé et d'autre part un clapet mobile (6) dont la tige (9, 90) est actionnée par des moyens d'excitation comportant un noyau mobile (12 ; 12a, 12b ; 120) placé dans l'enceinte sous vide (15) hors du corps de vanne (1) et une bobine électromagnétique de commande (13 ; 130), un ressort de rappel (10) plaquant le clapet sur son siège (5 ; 5a, 5b) en l'absence d'excitation.

2. Vanne cryogénique sous vide selon la revendication 1, caractérisée en ce qu'elle comporte une chemise (17) solidaire de l'enceinte sous vide (15) et séparant le noyau mobile (12) de la bobine électromagnétique de commande (13) placée à l'extérieur de l'enceinte.

3. Vanne cryogénique sous vide selon la revendication 1 ou la revendication 2, caractérisée en ce qu'elle comporte des moyens d'étanchéité (18) de l'enceinte (15) avec l'extérieur.

4. Vanne cryogénique sous vide selon la revendication 1 ou la revendication 2, caractérisée en ce qu'elle comporte un soufflet (7) solidaire d'une part du corps de vanne (1) et d'autre part de la tige (9; 90) pour assurer l'étanchéité entre le fluide circulant dans les canaux (20, 22, 30) et l'enceinte sous vide (15).

5. Vanne cryogénique sous vide selon la revendication 1 ou la revendication 2, caractérisée en ce qu'elle comporte deux canaux d'entrée (20, 22) et un canal de sortie (30) du fluide cryogénique.

6. Vanne cryogénique sous vide selon la revendication 1 ou la revendication 2, caractérisée en ce que les moyens d'excitation sont constitués par un moteur pas à pas (150).

## Patentansprüche

1. Elektrisch gesteuertes Vakuumkryoventil mit einerseits einem Ventilkörper (1), der den Sitz (5; 5a, 5b) einer Verschlußkappe (6) und von Eingangskanälen (20, 22) und Ausgangskanälen (30) für eine Kryoflüssigkeit aufnimmt, wobei der Körper (1) und die Kanäle (20, 22, 30) in einem Mantel (15) angeordnet sind, in welchem ein Vakuum erzeugt wird, und andererseits einer mobilen Verschlußkappe (6), deren Schaft (9, 90) durch Anregungseinrichtungen betätigt wird, die einen mobilen Kern (12; 12a, 12b, 120) aufweisen, der in dem Mantel unter Vakuum (15) außerhalb des Ventilkörpers (1) angeordnet ist und einer elektromagnetischen Steuerspule (13; 130), einer Rückstellfeder (10), die ohne Anregung die Verschlußkappe auf ihrem Sitz (5; 5a, 5b) festsetzt.

2. Vakuumcryogenventil nach Anspruch 1, gekennzeichnet durch eine Außenhaut (17), die fest mit dem Mantel im Vakuum (15) verbunden ist und den mobilen Kern von der elektromagnetischen Steuerspule (13) trennt, die im Inneren des Mantels angeordnet ist.

3. Vakuumcryogenventil nach Anspruch 1 oder 2, gekennzeichnet durch Einrichtungen (18) zur Abdichtung des Mantels (15) nach außen.

4. Vakuumcryogenventil nach Anspruch 1 oder 2, gekennzeichnet durch eine Pumpe (7), die einerseits fest mit dem Ventilkörper (1) und andererseits mit dem Schaft (9; 90) verbunden ist, die die Dichtheit zwischen der Flüssigkeit, die in den Kanälen (20, 22, 30) zirkuliert, und dem Mantel im Vakuum (15) ermöglicht.

5. Kryoventil nach Anspruch 1 oder Anspruch 2, gekennzeichnet durch zwei Eingangskanäle (20, 22) und einen Ausgangskanal (30) für die Kryoflüssigkeit.

6. Vakuumkryoventil nach Anspruch 1 oder Anspruch 2, dadurch gekennzeichnet, daß die Anregungseinrichtung aus einem Schrittmotor (150) besteht.

## Claims

1. Electrically controlled cryogenic valve operating in vacuo, comprising, on the one hand, a valve body (1) accommodating the seat (5; 5a, 5b) of a valve disc (6) and inlet (20, 22) and outlet (30) channels for a cryogenic fluid, this body (1) and these channels (20, 22, 30) being arranged in a chamber (15) in which a vacuum is created and, on the other hand, a movable valve disc (6) whose stem (9, 90) is actuated by excitation means comprising a movable core (12; 12a, 12b; 120) placed in the vacuum chamber (15) outside the valve body (1) and an electromagnetic control coil (13; 130), a return spring (10) pressing the valve disc against its seat (5; 5a, 5b) in the absence of excitation.

2. Cryogenic valve operating in vacuo according to Claim 1, characterized in that it comprises a sleeve (17) fastened to the vacuum chamber (15) and separating the movable core (12) from the electromagnetic control coil (13) placed outside the vacuum chamber.

3. Cryogenic valve operating in vacuo according to Claim 1 or Claim 2, characterized in that it comprises means (18) for sealing the vacuum chamber (15) with respect to the outside.

4. Cryogenic valve operating in vacuo according to Claim 1 or Claim 2, characterized in that it comprises a bellows (7) fastened, on the one hand, to the valve body (1) and, on the other hand, to the stem (9; 90) in order to provide sealing between the fluid flowing in the channels (20, 22, 30) and the vacuum chamber (15).

5. Cryogenic valve operating in vacuo according to Claim 1 or Claim 2, characterized in that it comprises two inlet channels (20, 22) and one outlet channel (30) for the cryogenic fluid.

6. Cryogenic valve operating in vacuo according to Claim 1 or Claim 2, characterized in that the excitation means consist of a stepper motor (150).
